# EUROPEAN PATENT SPECIFICATION

(11) **EP 3 786 004 B1**
(45) Date of publication and mention of the grant of the patent: **05.01.2022**
(21) Application number: 19194186.3
(22) Date of filing: 28.08.2019
(51) Int. Cl.: B60R 21/232, B60R 21/2334, B60R 21/235, B60R 21/233

(54) **IMPROVEMENT IN OR RELATING TO AIR-BAGS**
VERBESSERUNGEN AN ODER IM ZUSAMMENHANG MIT AIRBAGS
AMÉLIORATION APPORTÉE OU SE RAPPORTANT À DES AIRBAGS

(43) Date of publication of application: 03.03.2021
(73) Proprietor: Autoliv Development AB, 447 83 Vårgårda (SE)
(72) Inventor: Finn, Hugh, Warrington WA3 4LG (GB); Wootton, Gary, Stoke-on-Trent ST7 3PH (GB); Svensson, Carl-Johan, 447 34 Värgärda (SE); Berntsson, Mats, 44158 Alingsäs (SE)
(74) Representative: Forresters IP LLP

(56) References cited:
- US-A1- 2010 244 415
- US-B1- 6 361 071
- US-B2- 8 585 081

## Description

### Description of Invention

One piece woven (OPW) air-bags are widely used in vehicle safety systems, for instance in inflatable curtain (IC) air-bags, which are typically stored in a rolled configuration along a vehicle's roof line, and roll downwardly when deployed to provide an inflatable barrier between a vehicle occupant and the internal vehicle side wall.

An OPW air-bag is formed from two sheets of fabric which are woven simultaneously and are selectively interwoven, such that in some regions the two layers are woven together to form a single layer, and in other regions the layers are separated so that there is a space between the layers.

US 8 585 081 B2 discloses a conventional curtain air-bag having dot-like joint parts connecting first and second sheets of fabric.

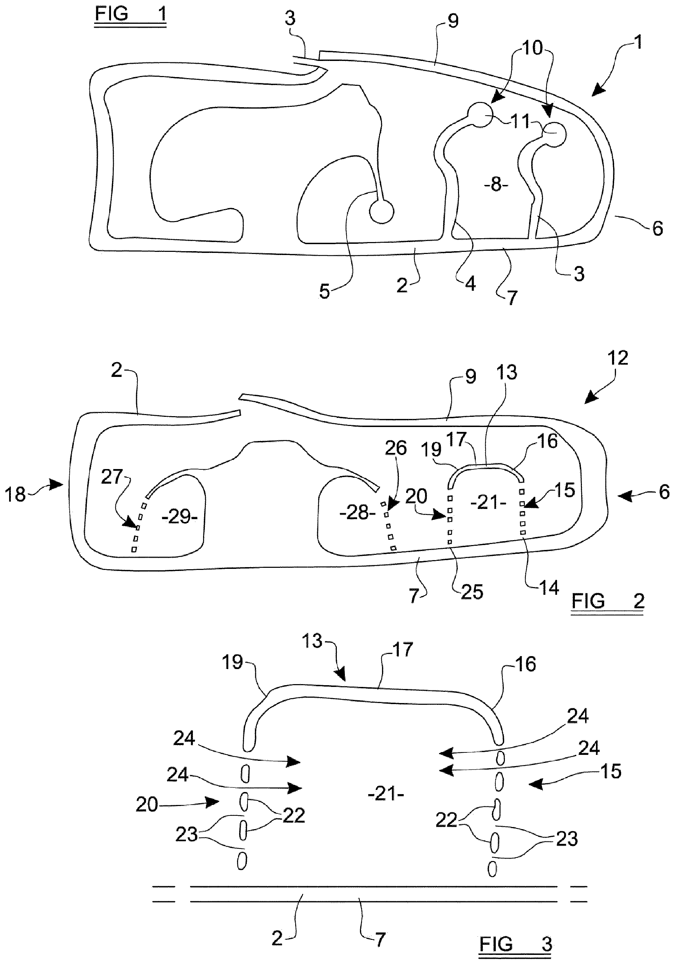

) A conventional OPW air-bag is shown in figure 1. As the skilled reader will understand, the two layers forming the OPW air-bag 1 are interwoven around the edge of the air-bag 1, to form a sturdy peripheral seam 2, which may have a thickness of around 3mm-7mm. The peripheral seam 2 is, in this example, interrupted only where an inlet 3 is provided to allow air to be introduced into the air-bag 1 from an inflator (not shown) during deployment.

A number of seams 3, 4, 5 are provided to divide the air-bag 1 into chambers.

For instance, towards the front end 6 of the air-bag 1, a pair of seams 3, 4 extend upwardly from the lower edge 7 of the peripheral seam 2, and define a chamber 8 therebetween. The seams 3, 4 extend most, but not all, of the way towards the upper edge 9 of the peripheral seam 2. The seams 3, 4 stop short of the upper edge 9 so that an airflow passage exists to allow air to flow into the chamber 8 from its upper side when the air-bag 1 is deployed.

The seams 3, 4 and chambers are provided to control the depth and shape of the air-bag 1 when it is deployed, and prevent the air-bag 1 from inflating into a cylindrical shape.

In the region of the free end 10 of each of these two seams 3, 4, where the seams 3, 4 terminate, the seams 3, 4 are at risk from damage by deployment forces when the air-bag 1 is activated. To reduce the risk of damage, the free end 10 of each of seam 3, 4 comprises a relatively large region 11 where the two layers of the air-bag 1 are interwoven. These relatively large interwoven areas 11 are sometimes referred to as "mushrooms".

The provision of these large interwoven areas 11 is not ideal, however, as the air-bag 1 does not inflate in these regions and therefore provides no protection to a vehicle occupant during a crash. The larger the area of the "mushroom", the more reliably the seam will retain its structure during deployment. However, this comes at the cost of a larger non-inflatable region.

It is an object of the present invention to provide an improved air-bag of this type.

According to one aspect of the present invention there is provided an air-bag as defined in claim 1 hereinafter.

In order that the invention may be more readily understood embodiments thereof will now be described, by way of example, with reference to the accompanying figures, in which:
figure 1 shows a conventional OPW air-bag;
figure 2 shows an OPW air-bag embodying the invention;
figure 3 shows more details of a seam of the air-bag of figure 2;
figure 4 shows details of an alternative seam; and

Conveniently, the first seam has first and second ends, and joins the peripheral seam at both the first and second ends, so that the first seam and the peripheral seam together enclose or substantially enclose the interior region.

Advantageously, the second region is positioned where the first seam joins the peripheral seam.

Preferably, the air-bag does not comprise any seams which terminate at a position which is within the peripheral seam and spaced apart from the peripheral seam.

Another aspect of the invention provides an air-bag module comprising an airbag according to any of the above in a rolled and/or folded state within a housing.

A further aspect of the invention provides a vehicle comprising an air-bag module according to the above.

In order that the invention may be more readily understood embodiments thereof will now be described, by way of example, with reference to the accompanying figures, in which:
figure 1 shows a conventional OPW air-bag;
figure 2 shows an OPW air-bag embodying the invention;
figure 3 shows more details of a seam of the air-bag of figure 2;

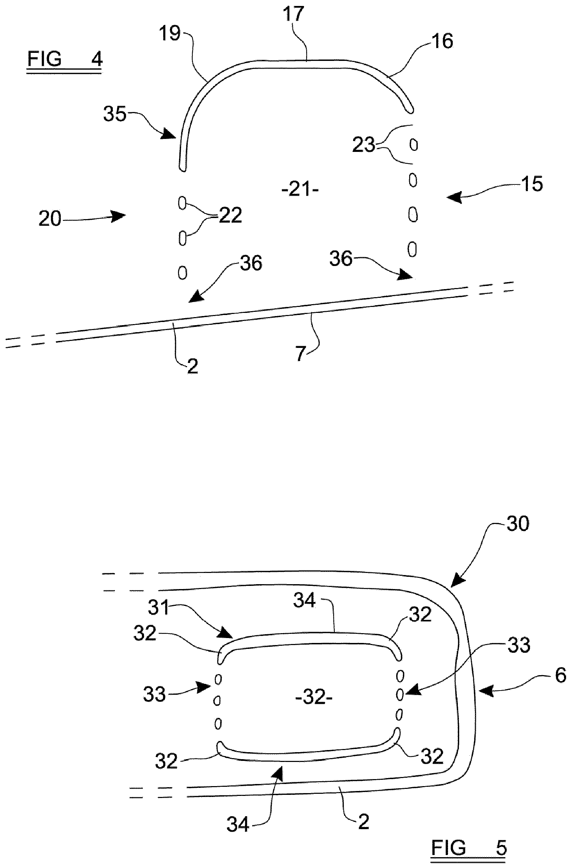

figure 4 shows details of an alternative seam; and
figure 5 shows details of yet a further seam.

Figure 2 shows an OPW air-bag 12 embodying the present invention. In common with the air-bag 1 shown in figure 1, the air-bag 12 embodying the invention comprises a peripheral seam 2, which runs around the perimeter of the air-bag 12 and at which the two layers of the air-bag 12 are interwoven.

The air-bag 12 is divided into chambers. However, the seams of the air-bag 12 are arranged so that they do not terminate at a free end in a central region of the air-bag 12, within the peripheral seam 2. For instance, towards the front end 6 of the air-bag 12, a seam 13 is provided which, at one end 14 thereof, joins the lower side of the peripheral seam 2. A first region 15 of the seam 13 extends towards the upper edge 9 of the air-bag 12. The seam 13 turns through a first corner 16, and a second region 17 of the seam extends generally towards the rear side 18 of the air-bag 12. The seam turns through a second corner 19, and a third region 20 of the seam extends downwardly towards the lower side 2 of the air-bag 12. At its lower end, the third region 20 of the seam 13 joins the peripheral seam 2, at a location 25 spaced apart from the point at which the first region 15 of the seam 13 joins the peripheral seam 2. The seam 13 therefore describes a closed loop, extending from, and returning to, the peripheral seam 2. The seam 13 does not terminate in a free end in a central region of the air-bag 12.

The seam 13 defines (along with the peripheral seam 2) a chamber 21. The chamber 21 is separated, by at least the seam 13, from a location at which gas is introduced into the air-bag 12 when the air-bag 12 is activated. In order to allow gas to flow into the chamber 21 when the air-bag 12 is deployed, at least a region of the seam 13 includes one or more gaps which are of sufficient size that gas can flow into the chamber 21 swiftly enough to allow the chamber 21 to be inflated in the normal manner as the air-bag 12 is activated.

For example, a typical inflation time for an IC air-bag is 30-70ms. In preferred embodiments of the invention the gaps in the seam 13 allow sufficient airflow therethrough that the chamber can become fully or substantially fully inflated within this timeframe.

For instance, one or more regions of the seam 13 may comprise a segmented seam, as will be understood by the skilled reader. A segmented seam comprises alternating regions in which the two layers of the air-bag are interwoven, and hence connected together, and regions at which the two layers of the air-bag are not interconnected, to create passageways through which gas may flow.

Figure 3 shows a schematic view of the seam 13, along with a region of the lower edge 7 of the peripheral seam 2. In this example, parts of the first and third portions 15, 20 of the seam 13 are formed as segmented seams, having regions 22 at which the two layers of the air-bag 12 are attached together, separated by regions 23 at which the two layers of the air-bag 12 are not connected to each other. The regions 23 at which the two layers are not connected to each other will form a plurality of gas flow paths which will allow gas to flow into the chamber 21 during deployment of the air-bag 12, as indicated schematically by arrows 24 in figure 3.

In preferred embodiments of the invention the regions 23 at which the two layers are not connected to each other each have a length (i.e. measured in a direction parallel with the direction of the seam) from 5-60mm. In some examples the length of each of these regions 23 is from 10-30mm, and in further examples the length of each of these regions is from 25-29mm.

In preferred embodiments the length of the regions 22 at which the two layers of the air-bag 12 are attached together (again measured in a direction parallel with the direction of the seam) from 5-60mm. In some examples the length of each of these regions 22 is 5-30mm, and in further examples the length of each of these regions is 10-20mm.

In preferred examples the width of the seam 13 (i.e. measured in a direction perpendicular to the direction of the seam) is from 3-7mm.

The first and second corners 16, 19 are, in this example, formed as continuous regions of the seam 13, and are not segmented or otherwise interrupted. This is because there is a higher likelihood of damage due to deployment forces at these corners 16, 19.

In this embodiment the second portion 17 of the seam 13 is also formed as a continuous seam, which will help to maintain the shape and integrity of the airbag 12 when deployed. It should be noted that this is only an example, however - in other examples, different portions of the seam may be formed to be segmented or unbroken, as required. It is anticipated that the regions of the seam which are formed to be segmented or unbroken will be selected based on requirements for integrity of the air-bag during inflation, and also airflow within the air-bag during inflation.

In some embodiments of the invention a seam which begins and ends at the peripheral seam, and which defines an enclosed region, comprises a combination of substantially straight and curved regions, and the seam is segmented only in some or all of the substantially straight regions, and is not segmented in the curved regions.

It is also preferred that the radius of any curved regions of the seam is relatively large, which will reduce the likelihood of the seam being damaged by deployment forces. In the conventional air-bag shown in figure 1, the seams 3, 4 may have relatively tight corners, having a radius of curvature of around 25mm. By contrast, the first and second corners 16 and 19 of the seam 13 shown in figure 2 have a radius of around 100mm.

Returning to figure 2, it can be seen that the air-bag 12 has two further segmented seams 26, 27, which at least partly define two further chambers 28, 29.

In preferred embodiments of the invention, the radius of curvature of corners of the seam is no less than 50mm.

Referring to figure 4, a further example of a region of an air-bag embodying the present invention is shown. A seam 35 has, in common with the seam 13 shown in figure 3, first and third regions 15, 20 that comprise segmented seams, and a second region 17 that comprises continuous seam. In this example, over the majority of the length of the first and third regions 15, 20, the regions 22 where the two layers of the air-bag are attached to each other each have a length of 15mm, and the regions 23 where the two layers of the air-bag are not attached to each other each have a length of 25mm. However, both the first and third regions 15, 20 include, where these regions meet the peripheral seam 2, a larger region 36 where the two layers of the air-bag are not joined to each other. These larger regions 36 have, in the example shown, lengths of 45-55mm.

In embodiments of the invention, within a seam or a region of a seam, the regions where the two layers of the air-bag are not connected to each other need not all have the same length, and the lengths of these non-connected regions may be varied depending on, for example, desired air-flow characteristics during activation.

While many other possibilities may be used, providing a larger non-connected region where a seam meets the peripheral seam will allow additional gas flow during inflation of the air-bag where the seams will most be able to withstand the deployment forces.

Larger non-connected regions may also be provided at locations which are further from the point at which gas enters the air-bag during inflation. If in the example of figure 4 the gas inlet is (as shown in figure 2) provided at the top edge 9 of the air-bag, then where the seam 35 meets the lower edge 7 of the peripheral seam 2 is relatively far from this inlet, and the inflation gases will have cooled significantly when they reach this location.

Within a seam or a region of a seam, the lengths of the regions 22 where the layers of the air-bag are connected to each other also need not be all the same length.

Preferably, the entire air-bag 12 is formed without any seams which terminate in a free end at a region spaced apart from the peripheral seam 2 of the airbag 12, as is the case in the example shown in figure 2.

The two ends of each region 22 at which the two layers of the air-bag 12 are attached together will not, during inflation of the air-bag 12, be subject to forces as high as those which are experienced by the mushrooms of the conventional air-bag 1 shown in figure 1. The inventors' understanding is that this is because the arrangement of these regions 22 into a linear seam with relatively small unconnected regions 23 therebetween leads to a situation during inflation in which the deployment forces are distributed, and are not concentrated to result in large forces in any specific locations.

In the illustrated embodiment the seam 13 joins the peripheral seam 2 at two spaced-apart locations. While this is preferred, it is also envisaged that a seam may describe a closed loop, defining a chamber, and join the peripheral seam at a single location or at two locations which are close together.

It is also envisaged that a seam may form a closed or substantially closed loop, enclosing an interior region, and not contact or join the peripheral seam. In such examples the seam may be formed entirely within a central region of the air-bag. An example of this is shown in figure 5, which shows the forward end of a further air-bag 30. In this arrangement, a seam 31 takes a substantially rectangular form, and defines a chamber 32, which is separated from the gas inlet (not shown) by the seam 31.

The seam 31 has curved corners 32, and two opposing sides 33 of the rectangular shape (in this example, the sides which face generally towards the front and rear ends of the air-bag 30) comprise segmented seams, while the other two sides 34 comprise continuous or substantially continuous seams. In further examples, however, all four of the sides of the rectangle may comprise segmented seams. The skilled reader will appreciate that these are only examples, and any other suitable shape for the seam may be used.

While this is not shown in figure 5, the regions 23 at which the two layers of the air-bag are not joined to each other may be longer on the side nearest to the front 6 of the air-bag 30 (i.e. the right-hand side, as seen in figure 5) than on the opposite side. The side nearest to the front 6 of the air-bag 30 will be further from the inlet (both in terms of absolute distance from the inlet, and also in terms of the length of the effective gas flow path from the inlet), and as discussed above the inflation gases will have cooled further by the time these gases reach the side of the seam 31 that is closest to the front 6 of the air-bag 30. Longer unconnected regions may therefore be positioned on this side, to allow a higher rate of gas flow where deployment forces will be less.

The example above relates to OPW air-bags. However, the invention is not limited to this, and the techniques disclosed herein may be used in any other type of air-bag or inflatable structure in which one or more seams selectively join two layers of the inflatable structure together to form chambers which are inflated when the inflatable structure is itself inflated. The invention may therefore be used with conventional air-bags in which regions of fabric are individually formed and subsequently connected to one another, for instance by sewing.

Returning to OPW air-bags, the "mushroom" feature at the free end of a seam of a conventional air-bag typically covers an area of around 1,560mm². By removing these non-inflated areas from a conventional OPW IC air-bag, which contains four such regions, the air-bag will comprise around an additional 6,240mm² of inflatable space, thus affording greater protection to a vehicle occupant in the event of a crash.

In the examples above, which relate to IC air-bags, many of the seams, or generally straight parts of the seams, are arranged so as to be substantially vertical or horizontal when the air-bag is deployed in the normal way. For the avoidance of doubt no orientation of the seams is essential to the invention, or preferred over any other, and the invention covers seams which are (for example) oriented diagonally when the air-bag is deployed.

It will be understood that the invention provides a simple and robust improvement compared to conventional air-bag construction techniques.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag (12) comprising:
first and second sheets of fabric;
an inlet into which gas will be introduced into the air-bag (12) to inflate the air-bag when the air-bag is deployed; and
a first seam (13) which describes or forms part of a loop which encloses or substantially encloses an interior region (21), so that the interior region (21) is separated from the inlet by at least the first seam (13),
wherein the first seam (13) comprises:
a first portion (15);
a second portion (17); and
a third portion (20);
wherein the first portion (15) and the third portion (20) are each a respective segmented seam, each segmented seam comprising a spaced-apart series of regions (23) at which the first and second sheets of fabric are not joined to one another, to allow gas to flow into (24) the interior region (21) from a region outside the interior region, to allow inflation of the interior region (21) during deployment of the air-bag (12); and
wherein the second portion (17) is a continuous seam.

2. An air-bag (12) according to claim 1, wherein the regions (23) at which the first and second sheets of fabric are not joined to one another are interspersed by regions (22) at which the first and second sheets of fabric are joined to one other.

3. An air-bag (12) according to claim 1 or 2, wherein the spaced-apart series of regions (22, 23) are arranged in a substantially linear manner.

4. An air-bag (12) according to any one of claims 1 to 3, wherein the spaced-apart series of regions (23) at which the first and second sheets of fabric are not joined to one another include a first, relatively short, region and a second, relatively long region (26).

5. An air-bag (12) according to claim 4, wherein the second region is positioned at a region (15) of the first seam (13) which is relatively far away from the inlet, compared to other regions of the first seam (13).

6. An air-bag (12) according to any preceding claim, wherein the first seam (13) comprises at least one region (15, 17, 20) which is substantially straight and at least one region (16, 19) which is substantially curved, and wherein the substantially straight region (15, 17, 20) contains the one or more regions (15, 20) at which the first and second sheets of fabric are not joined to one another, and the curved region (16, 19) comprises a substantially unbroken seam.

7. An air-bag (12) according to any preceding claim, wherein the air-bag (12) is a one piece woven (OPW) air-bag (12), comprising two layers of fabric which are selectively interwoven.

8. An air-bag (12) according to any preceding claim, wherein the air-bag (12) further comprises a peripheral seam (2), which is substantially continuous around the periphery of the air-bag (12) apart from at the inlet.

9. An air-bag (12) according to claim 8, wherein the first seam (13) has first and second ends (14, 25), and joins the peripheral seam at both the first and second ends (14, 25), so that the first seam (13) and the peripheral seam (2) together enclose or substantially enclose the interior region (21).

10. An air-bag (12) according to claim 9, when dependent upon claim 5, wherein the second region (26) is positioned where the first seam (13) joins the peripheral seam (2).

11. An air-bag (12) according to any one of claims 8 to 10, which does not comprise any seams which terminate at a position which is within the peripheral seam (2) and spaced apart from the peripheral seam (2).

12. An air-bag module comprising an air-bag (12) according to any preceding claim in a rolled and/or folded state within a housing.

13. A vehicle comprising an air-bag module according to claim 12.

## Patentansprüche

1. Airbag (12), der Folgendes umfasst:
eine erste und eine zweite Stoffbahn;
einen Einlass, in den Gas in den Airbag (12) eingeleitet wird, um den Airbag aufzublasen, wenn der Airbag entfaltet wird; und
eine erste Naht (13), die eine Schleife darstellt oder einen Teil davon ausbildet, die einen Innenbereich (21) einschließt oder im Wesentlichen einschließt, so dass der Innenbereich (21) von dem Einlass durch wenigstens die erste Naht (13) getrennt ist,
wobei die erste Naht (13) Folgendes umfasst:
einen ersten Abschnitt (15);
einen zweiten Abschnitt (17); und
einen dritten Abschnitt (20);
wobei der erste Abschnitt (15) und der dritte Abschnitt (20) jeweils eine jeweilige segmentierte Naht sind, wobei jede segmentierte Naht eine voneinander beabstandete Reihe von Bereichen (23) umfasst, an denen die erste und die zweite Stoffbahn nicht miteinander verbunden sind, um es zu ermöglichen, dass Gas von einem Bereich außerhalb des Innenbereichs in den Innenbereich (21) strömt (24), um ein Aufblasen des Innenbereichs (21) während einer Entfaltung des Airbags (12) zu ermöglichen; und
wobei der zweite Abschnitt (17) eine fortlaufende Naht ist.

2. Airbag (12) nach Anspruch 1, wobei die Bereiche (23) an denen die erste und die zweite Stoffbahn nicht miteinander verbunden sind durch Bereiche (22) an denen die erste und die zweite Stoffbahn miteinander verbunden sind durchsetzt sind.

3. Airbag (12) nach Anspruch 1 oder 2, wobei die voneinander beabstandete Reihe von Bereichen (22, 23) auf eine im Wesentlichen lineare Weise angeordnet ist.

4. Airbag (12) nach einem der Ansprüche 1 bis 3, wobei die voneinander beabstandete Reihe von Bereichen (23), an denen die erste und die die zweite Stoffbahn nicht miteinander verbunden sind, einen ersten, relativ kurzen Bereich und einen zweiten, relativ langen Bereich (26) beinhaltet.

5. Airbag (12) nach Anspruch 4, wobei der zweite Bereich in einem Bereich (15) der ersten Naht (13) positioniert ist, der relativ weit von dem Einlass im Vergleich zu anderen Bereichen der ersten Naht (13) entfernt ist.

6. Airbag (12) nach einem der vorhergehenden Ansprüche, wobei die erste Naht (13) wenigstens einen Bereich (15, 17, 20), der im Wesentlichen gerade ist, und wenigstens einen Bereich (16, 19), der im Wesentlichen gekrümmt ist, umfasst, und wobei der im Wesentlichen gerade Bereich (15, 17, 20) den einen oder die mehreren Bereiche (15, 20) enthält, an denen die erste und die zweite Stoffbahn nicht miteinander verbunden sind, und der gekrümmte Bereich (16, 19) eine im Wesentlichen ununterbrochene Naht umfasst.

7. Airbag (12) nach einem der vorhergehenden Ansprüche, wobei der Airbag (12) ein einteilig gewebter (one piece woven - OPW) Airbag (12) ist, der zwei Lagen Stoff umfasst, die wahlweise verwoben sind.

8. Airbag (12) nach einem der vorhergehenden Ansprüche, wobei der Airbag (12) ferner eine Umfangsnaht (2) umfasst, die im Wesentlichen fortlaufend um den Umfang des Airbags (12) herum verläuft, abgesehen von dem Einlass.

9. Airbag (12) nach Anspruch 8, wobei die erste Naht (13) ein erstes und ein zweites Ende (14, 25) aufweist und sich sowohl an dem ersten als auch an dem zweiten Ende (14, 25) mit der Umfangsnaht verbindet, so dass die erste Naht (13) und die Umfangsnaht (2) zusammen den Innenbereich (21) einschließen oder im Wesentlichen einschließen.

10. Airbag (12) nach Anspruch 9, wenn abhängig von Anspruch 5, wobei der zweite Bereich (26) positioniert ist, wo sich die erste Naht (13) mit der Umfangsnaht (2) verbindet.

11. Airbag (12) nach einem der Ansprüche 8 bis 10, der keine Nähte umfasst, die an einer Position abschließen, die innerhalb der Umfangsnaht (2) liegt und von der Umfangsnaht (2) beabstandet ist.

12. Airbagmodul, das einen Airbag (12) nach einem der vorhergehenden Ansprüche in einem gerollten und/oder einem gefalteten Zustand innerhalb eines Gehäuses umfasst.

13. Fahrzeug, das ein Airbagmodul nach Anspruch 12 umfasst.

## Revendications

1. Coussin gonflable (12) comprenant :
des premier et second pans de tissu ;
une entrée par laquelle du gaz sera introduit dans le coussin gonflable (12) pour gonfler le coussin gonflable lorsque le coussin gonflable est déployé ; et
une première couture (13) qui décrit ou fait partie d'une boucle qui enferme ou enferme sensiblement une région intérieure (21), de telle sorte que la région intérieure (21) est séparée de l'entrée par au moins la première couture (13),
dans lequel la première couture (13) comprend :
une première partie (15) ;
une deuxième partie (17) ; et
une troisième partie (20) ;
dans lequel la première partie (15) et la troisième partie (20) sont chacune une couture segmentée respective, chaque couture segmentée comprenant une série espacée de régions (23) au niveau desquelles les premier et second pans de tissu ne sont pas joints l'un à l'autre, pour permettre à du gaz de s'écouler dans (24) la région intérieure (21) depuis une région à l'extérieur de la région intérieure, pour permettre le gonflage de la région intérieure (21) pendant le déploiement du coussin gonflable (12) ; et
dans lequel la deuxième partie (17) est une couture continue.

2. Coussin gonflable (12) selon la revendication 1, dans lequel les régions (23) au niveau desquelles les premier et second pans de tissu ne sont pas joints l'un à l'autre sont entrecoupées de régions (22) au niveau desquelles les premier et second pans de tissu sont joints l'un à l'autre.

3. Coussin gonflable (12) selon la revendication 1 ou 2, dans lequel la série espacée de régions (22, 23) est agencée de manière sensiblement linéaire.

4. Coussin gonflable (12) selon l'une quelconque des revendications 1 à 3, dans lequel la série espacée de régions (23) au niveau desquelles les premier et second pans de tissu ne sont pas joints l'un à l'autre comprend une première, relativement courte, région et une seconde relativement longue, région (26).

5. Coussin gonflable (12) selon la revendication 4, dans lequel la seconde région est positionnée au niveau d'une région (15) de la première couture (13) qui est relativement éloignée de l'entrée, par rapport aux autres régions de la première couture (13).

6. Coussin gonflable (12) selon l'une quelconque des revendications précédentes, dans lequel la première couture (13) comprend au moins une région (15, 17, 20) qui est sensiblement droite et au moins une région (16, 19) qui est sensiblement incurvée, et dans lequel la région sensiblement droite (15, 17, 20) contient la ou les régions (15, 20) au niveau desquelles les premier et second pans de tissu ne sont pas joints l'un à l'autre, et la région incurvée (16, 19) comprend une couture sensiblement ininterrompue.

7. Coussin gonflable (12) selon l'une quelconque des revendications précédentes, dans lequel le coussin gonflable (12) est un coussin gonflable (12) tissé en une seule pièce (OPW), comprenant deux couches de tissu qui sont sélectivement entrelacées.

8. Coussin gonflable (12) selon l'une quelconque des revendications précédentes, dans lequel le coussin gonflable (12) comprend en outre une couture périphérique (2), qui est sensiblement continue autour de la périphérie du coussin gonflable (12) à l'exception de l'entrée.

9. Coussin gonflable (12) selon la revendication 8, dans lequel la première couture (13) a des première et seconde extrémités (14, 25), et joint la couture périphérique à la fois au niveau de la première et de la seconde extrémité (14, 25), de telle sorte que la première couture (13) et la couture périphérique (2) enferment ensemble ou enferment sensiblement la région intérieure (21).

10. Coussin gonflable (12) selon la revendication 9, lorsqu'elle dépend de la revendication 5, dans lequel la seconde région (26) est positionnée là où la première couture (13) joint la couture périphérique (2).

11. Coussin gonflable (12) selon l'une quelconque des revendications 8 à 10, qui ne comprend aucune couture qui se termine à une position qui est à l'intérieur de la couture périphérique (2) et est espacée de la couture périphérique (2).

12. Module de coussin gonflable comprenant un coussin gonflable (12) selon l'une quelconque des revendications précédentes dans un état enroulé et/ou plié à l'intérieur d'un boîtier.

13. Véhicule comprenant un module de coussin gonflable selon la revendication 12.
